# EUROPÄISCHE PATENTSCHRIFT

(11) **EP 1 026 021 B1**
(45) Veröffentlichungstag und Bekanntmachung des Hinweises auf die Patenterteilung: **02.01.2003**
(21) Anmeldenummer: 00101371.3
(22) Anmeldetag: 24.01.2000
(51) Int. Cl.: B60H 1/24

(54) **Ventil**
Valve
Soupape

(30) Priorität: 08.02.1999 DE 19905036
(43) Veröffentlichungstag der Anmeldung: 09.08.2000
(73) Patentinhaber: TRW Automotive Electronics & Components GmbH & Co. KG, 78315 Radolfzell (DE)
(72) Erfinder: Stiehl, Udo, 67691 Hochspeyer (DE)
(74) Vertreter: Schieschke, Klaus, Dipl.-Ing.

(56) Entgegenhaltungen:
- EP-A- 0 467 095
- EP-A- 0 673 795
- DE-A- 19 549 124
- FR-A- 2 578 943
- US-A- 3 539 150
- US-A- 4 304 265
- US-A- 5 373 867

## Beschreibung

Die Erfindung bezieht sich auf ein Ventil, bestehend aus einem Ventilrahmen, insbesondere einem Entlüftungsgehäuse für ein Kraftfahrzeug und einer Ventilklappe aus biegsamen, weichem Material, welches in einem Bereich mit dem Ventilrahmen verbunden und in weiteren Bereichen aus einer an dem Ventilrahmen über Kontaktflächen anliegenden Ruhestellung durch eine Luftströmung von den Kontaktflächen abhebbar ist, nach dem Oberbegriff des Anspruchs 1.

Es existieren eine Anzahl von Konstruktionen, welche sich beispielsweise auf sogenannte Rückluftsperren bei Kraftfahrzeugen beziehen (DE 40 23 190 A1, DE 40 02 052 C2, DE 89 02 504.0, EP 0 306 073 A1, DE 37 09 244 A1). Bei allen diesen bekannten Konstruktionen liegt eine aus weichem, biegsamen Material bestehende Ventilklappe in Ruhestellung gegen einen Ventilrahmen und wird durch eine Luftströmung von diesem abgehoben. Entfällt diese Luftströmung, kehrt die Ventilklappe in ihre Ruhestellung zurück. In der Praxis hat es sich nun ergeben, dass hierdurch erhebliche Geräusche auftreten können, zumal, wenn der Entlüftungsvorgang häufig eintritt. Diese Geräusche sind insbesondere dann störend, wenn sie sich bis in den Fahrgastinnenraum eines Kraftfahrzeuges fortsetzen. Auch bei anderen Ventilkonstruktionen kann dieser unerwünschte Effekt auftreten.

Als Stand der Technik, von dem die Erfindung ausgeht, ist eine Druckluftausgleichsvorrichtung bekannt, bei welcher die Kontaktflächen des Ventilrahmens zumindest teilweise eine im Querschnitt anlagereduzierte Geometrie aufweisen und aus dem gleichen Material wie der Ventilrahmen bestehen (DE 195 49 124 A1).

Nachteilig bei dieser Konstruktion ist, daß die Verwirklichung unterschiedlicher Härtegrade von Kontaktflächen und Ventilrahmen schwierig ist.

Weitere derartige Ventile sind ähnlich aufgebaut (FR A-2 57 89 43, US-A-4 304 2 65, US-A-3 539 150, EP-A 0 467 095).

Weiterhin sind Konstruktionen bekannt, bei welchen das Gehäuse Nuten aufweist, in welche Dichtungen eingesetzt werden (EP-A-0 673 795, US-A-5 373 867). Hier ist ein zusätzlicher Montageschritt erforderlich, um die entsprechenden Dichtungen in die Nuten einzusetzen.

Entsprechend liegt der vorliegenden Erfindung die Aufgabe zugrunde, die Nachteile der aus dem Stand der Technik bekannten Ventile zu beseitigen.

Diese Aufgabe wird gelöst, indem der Ventilrahmen und die Kontaktflächen im Mehrkomponentenspritzverfahren hergestellt sind, wobei die Kontaktflächen aus einer anderen Materialkomponente wie die des Ventilrahmens bestehen.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: einen Schnitt durch eine Rückluftsperre für eine Einrichtung zur Entlüftung des Innenraums eines Kraftfahrzeugs;
- Fig. 2d bis h: verschiedene Ausführungsmöglichkeiten der Gestaltung der Kontaktflächen im Querschnitt.

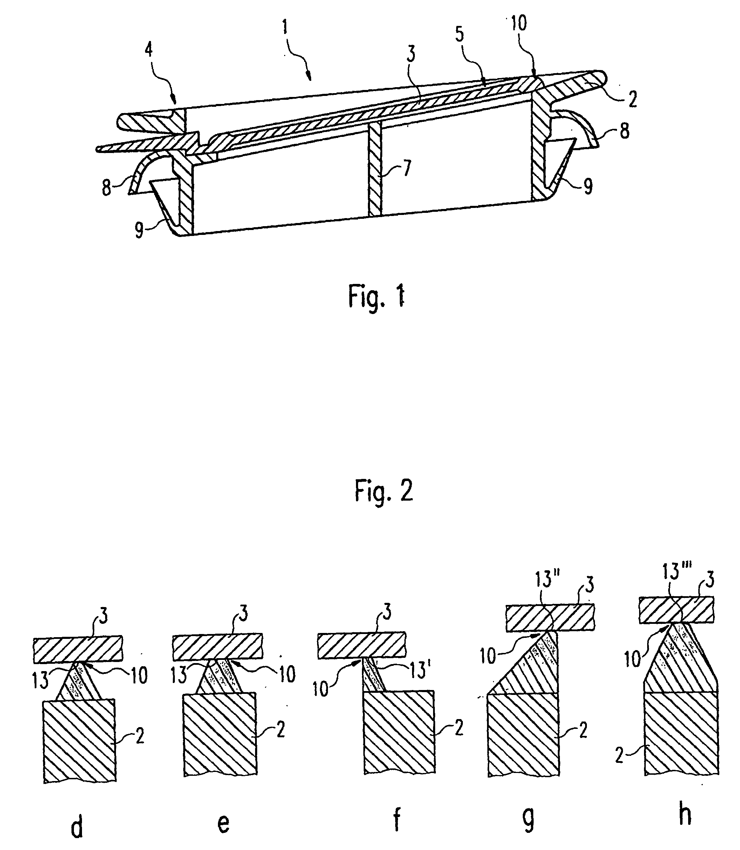

In Fig. 1 ist schematisch ein Ventil 1 dargestellt, welches beispielsweise als Rückluftsperre für eine Einrichtung zur Entlüftung des Innenraums eines Kraftfahrzeugs gestaltet sein kann, wobei auch andere Konfigurationen und/oder Funktionen möglich sind. Dieses Ventil 1 weist einen Ventilrahmen 2 aus hartem Kunststoffmaterial auf, sowie eine Ventilklappe 3 aus biegsamen weicherem Kunststoffmaterial, welches in einem Bereich 4 mit dem Ventilrahmen verbunden ist. In weiteren Bereichen 5 liegt diese Ventilklappe 3 über Kontaktflächen 10 an dem Ventilrahmen 2 in Ruhestellung (wie dargestellt) an und ist beispielsweise durch eine Luftströmung von den Kontaktflächen 10 abhebbar.

Der Ventilrahmen 2 kann ein schematisch dargestelltes Gitter 7 aufweisen, sowie Dichtlippen 8 und 9, welche nach Einsetzen des Rahmens 2 in eine nicht näher dargestellte Trägeröffnung einen dichten Abschluss mit Hilfe des Gehäuses 2 bewirken.

Der Rahmen kann rechteckig, rund oder oval gestaltet sein, wobei auch andere Befestigungsmöglichkeiten an einem Träger möglich sind.

Bei den Ausführungsformen nach Fig. 2d bis 2h sind die betreffenden Kontaktflächen 10 aus einer anderen Materialkomponente wie die des Ventilrahmens 2 hergestellt. Hierbei können der Ventilrahmen 2 und die Kontaktflächen 10 nachträglich oder gleichzeitig im Mehrkomponenten-Spritzverfahren hergestellt werden.

Die Fig. 2d bis 2h zeigen, dass die Kontaktflächen 10 beispielsweise als Dreieck 13 ausgebildet sind, mit angerundeter Spitze nach Fig. 2d oder mit einer flachen Abschlussfläche nach Fig. 2e. Nach Fig. 2f kann die Kontaktfläche 10 als Dreieck 13' bündig mit der Vorderseite des Rahmens 2 abschließen und nur noch einen geringen Bereich abdecken, wohingegen nach Fig. 2g und 2h die gesamte Stirnfläche als Basis für die Dreieckform 13" bzw. 13''' der Kontaktflächen 10 dient.

Die Form der Kontaktflächen 10 kann beliebig gestaltet werden, solange die Forderung erfüllt wird, dass diese Kontaktflächen 10 des Ventilrahmens 2 eine im Querschnitt anlagereduzierte Geometrie aufweisen, wodurch sich vorteilhafterweise ohne großen zusätzlichen baulichen Aufwand eine erhebliche Geräuschreduzierung beim Kontaktieren der Ventilklappe 3 mit dem Ventilrahmen 2 ergibt.

## Patentansprüche

1. Ventil (1), bestehend aus einem Ventilrahmen (2), insbesondere einem Entlüftungsgehäuse für ein Kraftfahrzeug und einer Ventilklappe (3) aus biegsamen, weichem Material, welches in einem Bereich (4) mit dem Ventilrahmen (2) verbunden und in weiteren Bereichen (5) aus einer an dem Ventilrahmen (2) über Kontaktflächen (10) anliegenden Ruhestellung durch eine Luftströmung von den Kontaktflächen abhebbar ist, wobei die Kontaktflächen (10) des Ventilrahmens (2) zumindest teilweise eine im Querschnitt anlagereduzierte Geometrie aufweisen, **dadurch gekennzeichnet, daß** die Kontaktflächen (10) aus einer anderen Materialkomponente wie die des Ventilrahmens (2) bestehen, und daß der Ventilrahmen (2) und die Kontaktflächen (10) im Mehrkomponentenspritzverfahren hergestellt sind.

2. Ventil nach Anspruch 1, **dadurch gekennzeichnet, dass** der Ventilrahmen (2) und die Kontaktflächen (10) nachträglich oder gleichzeitig in dem Mehrkomponentenspritzverfahren hergestellt sind.

3. Ventil nach Anspruch 1 oder 2, **dadurch gekennzeichnet, dass** die Kontaktflächen (10) als Dreieck (13, 13', 13', 13''') ausgebildet sind.

## Claims

1. Valve (1) composed of a valve frame (2), in particular a venting casing for a motor vehicle and a valve flap (3) made of flexible soft material which in one region (4) is connected to the valve frame (2) and in further regions (5) can be lifted off from the contact faces from a position of rest in which it bears against the valve frame (2) via contact faces (10) by means of a flow of air, the contact faces (10) of the valve frame (2) having at least partially a geometry which has a reduced cross-sectional bearing area, **characterized in that** the contact faces (10) are composed of a different material component to that of the valve frame (2), and **in that** the valve frame (2) and the contact faces (10) are manufactured using a multi-component injection moulding method.

2. Valve according to Claim 1, **characterized in that** the valve frame (2) and the contact faces (10) are subsequently or simultaneously manufactured using the multi-component injection moulding method.

3. Valve according to Claim 1 or 2, **characterized in that** the contact faces (10) are embodied as a triangle (13, 13', 13'', 13''').

## Revendications

1. Soupape (1) comprenant un châssis de soupape (2), en particulier un logement de purge, d'air pour un véhicule automobile, et un clapet de soupape (3) en un matériau souple, mou, qui dans une zone (4) est raccordé au châssis de soupape (2) et dans d'autres zones (5) en une position de repos attenante au châssis de soupape (2) par le biais de surfaces de contact (10) et pouvant être décollée des surfaces de contact par l'intermédiaire d'un courant d'air, les surfaces de contact (10) du châssis de soupape (2) présentant au moins partiellement une géométrie de contact réduite en coupe transversale, **caractérisée en ce que** les surfaces de contact consistent en un composant de matériau autre que celui du châssis de soupape (2), et **en ce que** le châssis de soupape (2) et les surfaces de contact (10) sont fabriqués par un procédé de pulvérisation de constituants multiples.

2. Procédé selon la revendication 1, **caractérisé en ce que** le châssis de soupape (2) et les surfaces de contact (10) sont fabriqués ultérieurement ou simultanément par le procédé de pulvérisation de constituants multiples.

3. Soupape selon la revendication 1 ou 2, **caractérisée en ce que** les surfaces de contact (10) sont conçues en forme de triangle (13,13',13'',13"').
